# EUROPEAN PATENT APPLICATION

(11) **EP 4 851 509 A1**
(43) Date of publication of application: **09.12.2026**
(21) Application number: 26179344.2
(22) Date of filing: 18.05.2026
(51) Int. Cl.: F16K 24/04, B01D 19/00, F16K 24/06, F16K 31/26

(54) **AIR ELIMINATOR**

(30) Priority: 20.05.2025 US 202563808879 P; 14.05.2026 US 202619677681
(71) Applicant: Gammon Technical Products, Inc., Manasquan, New Jersey 08736-0400 (US)
(72) Inventor: Gammon, James H., Manasquan, 08736 (US)
(74) Representative: Meissner Bolte Partnerschaft mbB

(57) **Abstract**

A combined air eliminator and drain valve includes a hollow enclosure configured to receive a plate thereon, the plate including an aperture and a float lever attachment point. The combined air eliminator and drain valve also includes a valve seat being configured to be received in the aperture of the plate and a seat edge formed thereon. Additionally, the combined air eliminator and drain valve includes a disc assembly having a disc, a float assembly, a hollow attachment recess formed within the disc assembly, and a disc assembly pivot coupling the float assembly to the disc assembly. The float assembly includes a float lever pivot, a float lever, and a float, the float configured to move the disc of the disc assembly in incremental steps relative to the axial movement of the float assembly.

## Description

### CROSS-REFERENCE TO RELATED APPLICATION

This application claims the benefit of U.S. Provisional Patent Application Serial No. 63/808,879, filed May 20, 2025, the entirety of which is herein incorporated by reference.

### FIELD OF THE INVENTION

The present invention relates to an air eliminator and/or a drain valve, and more particularly to an air eliminator and/or drain valve for handling of fluids at pressure.

### BACKGROUND OF THE INVENTION

In fluid systems handling pressurized fluids, air or other gases often become entrained or otherwise present in a liquid. Presence of the air can result in damage to fluid handling components such as pumps, for example. Further, the air can cause inaccurate measurement of liquid volumetric flow measurements and the like such as are necessary for fuel handling systems. It can also cause system behavioural issues, such as device functionality or reaction time issues (e.g., valves opening/closing), if a hydraulic device encounters compressible gases or vice versa. In order to prevent this from occurring, the air needs to be removed and vented to the atmosphere or otherwise removed from the fluid and the fluid handling system. Similarly, there is a need in gaseous systems to drain condensed or entrained liquids from the gas. Often, this is accomplished manually with a bleed valve, a poppet valve, or other valves.

Air eliminators are also well known in the art and are used to remove and vent unwanted air to the atmosphere, or to otherwise remove air from the fluid and the fluid handling system. Traditionally, air eliminators have a rubber orifice, a pin coupled to a lever that fits into the rubber orifice, and a float coupled to the lever, although there are many other designs and methods available in today's market. When there is air in the system that needs to be removed, the float within the air eliminator system pulls the lever to an open position. When the lever is pulled to an open position, the pin is axially removed from the rubber orifice, allowing for air to vent out of the air eliminator system.

However, the prior art results in an expensive, labour intensive, and inefficient system. This is because the housing and float of the air eliminator system must be large in size in order to operate effectively. Additionally, prior art air eliminators only have two stages, venting and sealed, with no in-between stages. This is because the pin of the air eliminator system may only be placed within the rubber orifice or removed from the rubber orifice. This results in an inefficient air venting system.

Therefore, it would be desirable to produce an air eliminator and/or drain valve that is less expensive to produce and more efficient than prior art systems.

### SUMMARY OF THE INVENTION

In harmony and accordance with the present disclosure, a combined air eliminator and drain valve for the handling of fluids at pressure wherein the combined air eliminator and drain valve is less expensive to produce and has an optimized efficiency has surprisingly been designed.

A combined air eliminator and drain valve that utilizes a pivot or rocker system that has a disc with no aperture formed within, wherein the disc presses against a seat, and consequently an aperture, of a valve placed within the air eliminator, and an accompanying float assembly cures the deficiency of the prior art. The float assembly is coupled to the disc and a hollow enclosure of the combined air eliminator and drain valve in a way that allows the disc to pivot incrementally in conjunction with the movement of the float assembly. When the disc pivots in incremental steps, the aperture of the valve may be revealed in incremental steps equal to the incremental steps of the disc, allowing for liquid or gas to drain or vent from the system in which the combined air eliminator and drain valve is being used.

In the illustrated embodiment, a combined air eliminator and drain valve includes a hollow enclosure having a first end and a second end, the first end configured to receive a plate thereon, the plate having an aperture formed therein and a float lever attachment point formed thereon and extending into the hollow enclosure. However, it is understood that other points and configurations can be used as desired. The combined air eliminator and drain valve also includes a valve seat having a first end and a second end, the first end of the valve seat configured to be received in the aperture of the plate, and the second end of the valve seat including a seat edge formed thereon; and a disc assembly having a first end, the first end of the disc assembly having a disc disposed adjacent the seat edge of the valve seat, a second end, the second end of the disc assembly having a float assembly coupled to the second end, a recess formed within the disc assembly housing a biasing member and a disc pivot, and a disc assembly pivot coupling the float assembly to the disc assembly. The float assembly includes a float lever pivot coupled to the float lever attachment point of the hollow enclosure, a float lever coupled to the float lever pivot and extending laterally from the float lever pivot, and a float coupled to the float lever and extending laterally from the float lever, the float configured to move the disc of the disc assembly in incremental steps relative to the axial movement of the float assembly. Wherein when the enclosure is used with a liquid system, the float is located below the float lever and when the enclosure is used with a gaseous system, the float is located above the float lever.

In one embodiment of the present disclosure, a combined air eliminator and drain valve includes a hollow enclosure; a valve seat coupled to the hollow enclosure, the valve seat including a seat edge and a venting aperture; and a disc assembly disposed within the hollow enclosure, the disc assembly including a disc disposed adjacent the seat edge of the valve seat and a float assembly operatively coupled to the disc, the float assembly including a float lever and a float coupled to the float lever, wherein the float moves the disc of the disc assembly relative to the seat edge in conjunction with a movement of the float.

In an embodiment of the disclosure, when the combined air eliminator and drain valve is used with a liquid system, the float is located below the float lever, and wherein when the combined air eliminator and drain valve is used with a gaseous system, the float is located above the float lever.

In an embodiment of the disclosure, the disc seals the venting aperture of the valve seat when the disc is pressed against the seat edge.

In an embodiment of the disclosure, the disc assembly pries the disc off of the seat edge in incremental steps in response to incremental movement of the float to reveal the venting aperture.

In an embodiment of the disclosure, the disc assembly further includes a recess formed therein, a biasing member disposed within the recess, and a disc pivot disposed within the recess, the biasing member and the disc pivot cooperating to permit the disc to self-level within the disc assembly.

In an embodiment of the disclosure, the disc assembly further includes a protrusion that extends axially within the recess.

In an embodiment of the disclosure, the disc has the geometric form of a flat cylindrical puck.

In an embodiment of the disclosure, the float has the geometric shape of a sphere and is buoyant in a fluid.

In another embodiment of the present disclosure, a combined air eliminator and drain valve includes a hollow enclosure having a first end and a second end, the first end configured to receive a first plate thereon, the first plate having an aperture formed therein and a float lever attachment point axially extending into the hollow enclosure; a valve seat having a first end and a second end, wherein the first end of the valve seat is received in the aperture of the first plate, and wherein the second end of the valve seat includes a seat edge formed thereon and a venting aperture formed therein; and a disc assembly having a first end and a second end, the first end of the disc assembly having a disc disposed adjacent the seat edge of the valve seat, the second end of the disc assembly having a float assembly coupled thereto, and the disc assembly further including a disc assembly pivot coupling the float assembly to the disc assembly, the float assembly including a float lever pivot coupled to the float lever attachment point of the hollow enclosure; a float lever coupled to the float lever pivot and extending laterally from the float lever pivot; and a float coupled to the float lever and extending axially from the float lever, wherein the float moves the disc of the disc assembly in incremental steps relative to axial movement of the float assembly.

In an embodiment of the disclosure, the float lever pivot allows the float assembly to pivot independently of the first plate.

In an embodiment of the disclosure, the disc assembly pivot rotatably couples the disc assembly and the float assembly to allow complementary movement of the disc assembly and the float assembly.

In an embodiment of the disclosure, the second end of the hollow enclosure is configured to receive a second plate to close the second end.

In an embodiment of the disclosure, the second plate includes a second aperture formed therein and an internally threaded nipple formed within the second aperture.

In an embodiment of the disclosure, further including a seal disposed between the plate and the hollow enclosure.

In an embodiment of the disclosure, the venting aperture fluidly connects the aperture of the plate to an interior of the hollow enclosure.

In yet another embodiment of the present disclosure, a combined air eliminator and drain valve includes a hollow enclosure having a first end and a second end, wherein the first end receives a first plate thereon, the first plate having a first aperture formed therein and a float lever attachment point formed thereon and extending into the hollow enclosure, and wherein the second end receives a second plate thereon to enclose the hollow enclosure; a valve seat having a first end and a second end, wherein the first end of the valve seat is received in the first aperture of the first plate, and wherein the second end of the valve seat includes a seat edge formed thereon and a venting aperture formed therein, the venting aperture fluidly connecting the first aperture of the first plate to an interior of the hollow enclosure; and a disc assembly having a first end and a second end, the first end of the disc assembly having a disc disposed adjacent the seat edge of the valve seat, the second end of the disc assembly having a float assembly coupled thereto, and the disc assembly further including a disc assembly pivot coupling the float assembly to the disc assembly, the float assembly including a float lever pivot coupled to the float lever attachment point of the hollow enclosure; a float lever coupled to the float lever pivot and extending laterally from the float lever pivot, a protrusion of the disc assembly resting on a top of the float lever; and a float coupled to the float lever and extending axially from the float lever, wherein the float pivots the disc of the disc assembly off of the seat edge in incremental steps in response to incremental movement of the float assembly, progressively revealing the venting aperture; wherein when the combined air eliminator and drain valve is used with a liquid system, the float is located below the float lever, and wherein when the combined air eliminator and drain valve is used with a gaseous system, the float is located above the float lever.

In an embodiment of the disclosure, the disc is a flat cylindrical puck.

In an embodiment of the disclosure, the float is a sphere and is coupled to the float lever with at least one threaded fastener.

### BRIEF DESCRIPTION OF THE DRAWINGS

The above, as well as other advantages of the present invention will become readily apparent to those skilled in the art from the following detailed description of a preferred embodiment when considered in the light of the accompanying drawings in which:
FIG. 1 is a top perspective view of a combined air eliminator and drain valve having an enclosure according to an embodiment of the present disclosure;
FIG. 2 is a top plan view of the air eliminator and the drain valve of FIG. 1;
FIG. 3 is a front perspective view of the air eliminator and the drain valve of FIG. 1 without the enclosure;
FIG. 4 is a cross sectional front elevational view of the air eliminator and the drain valve taken along line A-A of FIG. 2;
FIG. 5 is an enlarged fragmentary cross sectional elevational view of the air eliminator and the drain valve of FIG. 4;
FIG. 6 is a cross-sectional elevational view of the air eliminator and the drain valve of FIG. 4 entirely filled with fuel and showing the valve in a closed position;
FIG. 7 is a cross-sectional elevational view of the air eliminator and the drain valve of FIG. 4 partially filled with fuel, partially filled with vapor and/or gases, and showing the valve in a closed position;
FIG. 8A is an enlarged fragmentary cross sectional elevational view of the air eliminator and the drain valve of FIG. 4 showing the valve in a partially open position;
FIG. 8B is a cross-sectional elevational view of the air eliminator and the drain valve of FIG. 4 partially filled with fuel, partially filled with vapor and/or gases, and showing the valve in a partially open position;
FIG. 9A is an enlarged fragmentary cross sectional elevational view of the air eliminator and the drain valve of FIG. 4 showing the valve in a fully open position;
FIG. 9B is a cross-sectional elevational view of the air eliminator and the drain valve of FIG. 4 partially filled with fuel, partially filled with vapor and/or gases, and showing the valve in a fully open position; and
FIG. 10 is a cross-sectional elevational view of the air eliminator and the drain valve of FIG. 4 partially filled with fuel, partially filled with vapor and/or gases, and showing the valve in a closed position.

### DETAILED DESCRIPTION OF EXEMPLARY EMBODIMENTS OF THE INVENTION

The following detailed description and appended drawings describe and illustrate various exemplary embodiments of the invention. The description and drawings serve to enable one skilled in the art to make and use the invention, and are not intended to limit the scope of the invention in any manner.

"A" and "an" as used herein indicate "at least one" of the item is present; a plurality of such items may be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that may arise from ordinary methods of measuring or using such parameters. Where any conflict or ambiguity may exist between a document incorporated by reference and this detailed description, the present detailed description controls.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "top," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

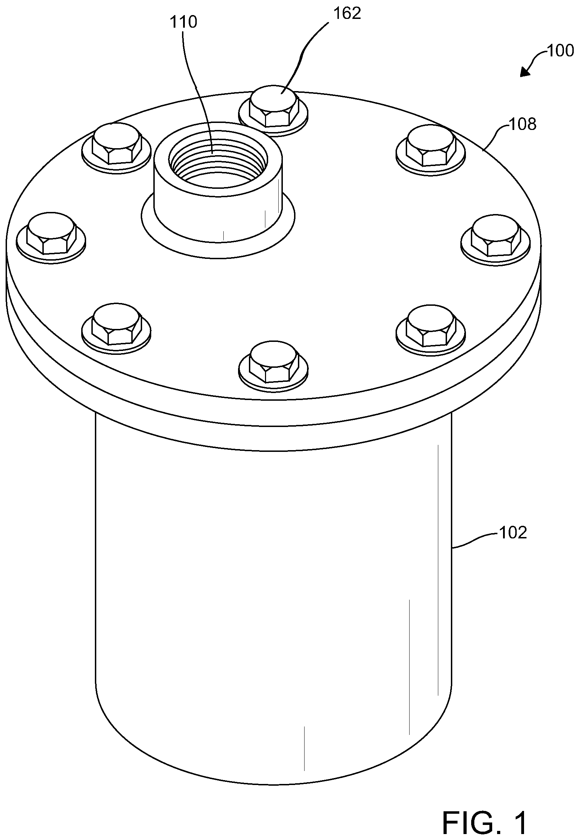

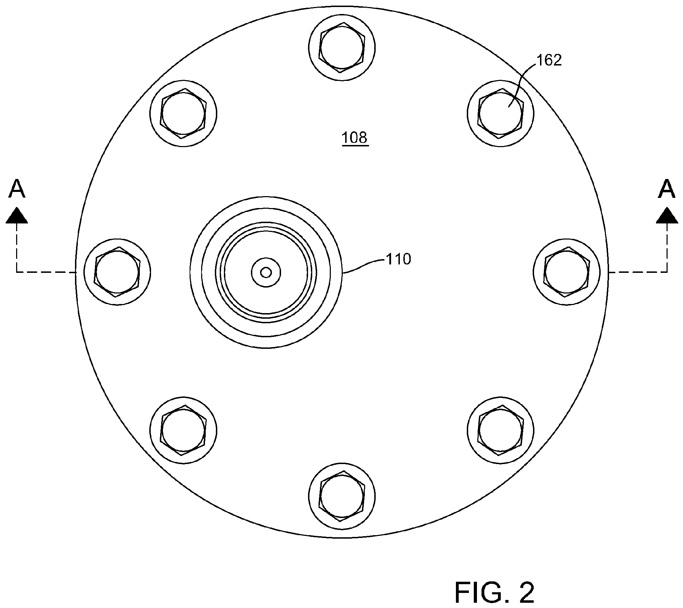

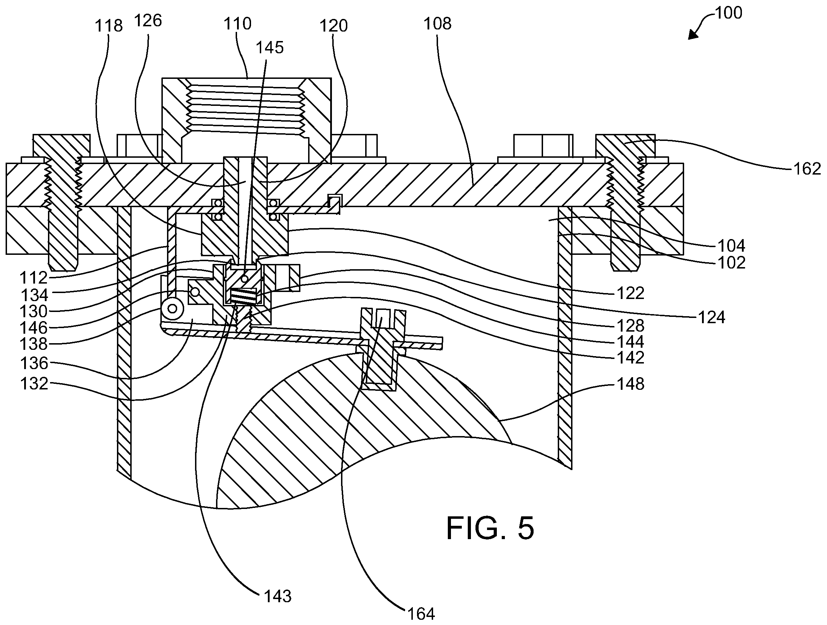

A combined air eliminator and a drain valve 100 according to an embodiment of the disclosure is shown in FIGS. 1-10. The combined air eliminator and drain valve 100 includes a hollow enclosure 102 as illustrated best by FIGS. 1-2 and 4. As shown, the enclosure 102 is substantially cylindrical with an open first end 104 and an open second end 106. However, other shapes and configurations may be used for the enclosure 102 as desired by one skilled in the art. In an exemplary embodiment, the enclosure 102 is produced from stainless steel. However, it should be appreciated that the enclosure 102 may be produced from steel, aluminium, other metals, plastic, or other materials as desired by one skilled in the art.

The first end 104 of the enclosure 102 is configured to receive a first plate 108 or a lid thereon. In an exemplary embodiment, the first plate 108 is produced from stainless steel. However, it should be appreciated that the first plate 108 may be produced from steel, aluminium, other metals, plastic, or other materials as desired by one skilled in the art and may be produced from the same material or a different material from the enclosure 102. The first plate 108 may be coupled to the enclosure 102 by threaded fasteners, bolts, screws, welding, or other joining methods as desired by one skilled in the art. In an exemplary embodiment as illustrated by FIGS. 1-2, the first plate 108 is coupled to the enclosure 102 by at least one threaded fastener 162. Additionally, a seal (not illustrated) may be provided between the first plate 108 and the enclosure 102. The seal may be any seal as desired and may be produced from any desirable material, including, but not limited to, elastomers, rubbers, plastics, metals, or any other material of the like. The first plate 108 also includes an aperture 110 formed therein. As illustrated, the aperture 110 is offset from the center of the first plate 108, although the aperture 110 can be formed elsewhere on the first plate 108 if desired.

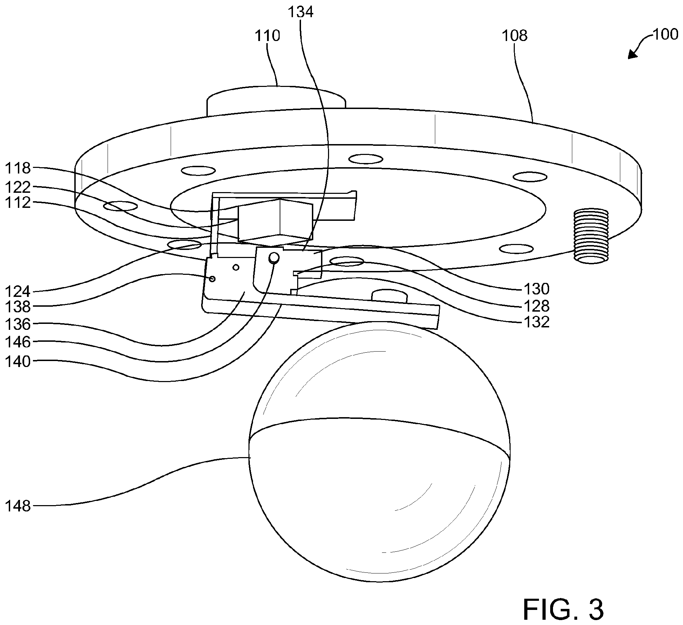

The first plate 108 further includes a float lever attachment point 112 that is formed thereon the first plate 108 and extends axially into the enclosure 102. As illustrated by FIGS. 3-10, the float lever attachment point 112 has a cylindrical geometric shape. However, the float lever attachment point 112 may take any shape and have any configuration as desired by one skilled in the art. In an exemplary embodiment, the float lever attachment point 112 is formed thereon the first plate 108, however, the float lever attachment point 112 may also be formed separately and coupled to the first plate 108 using any desired coupling method.

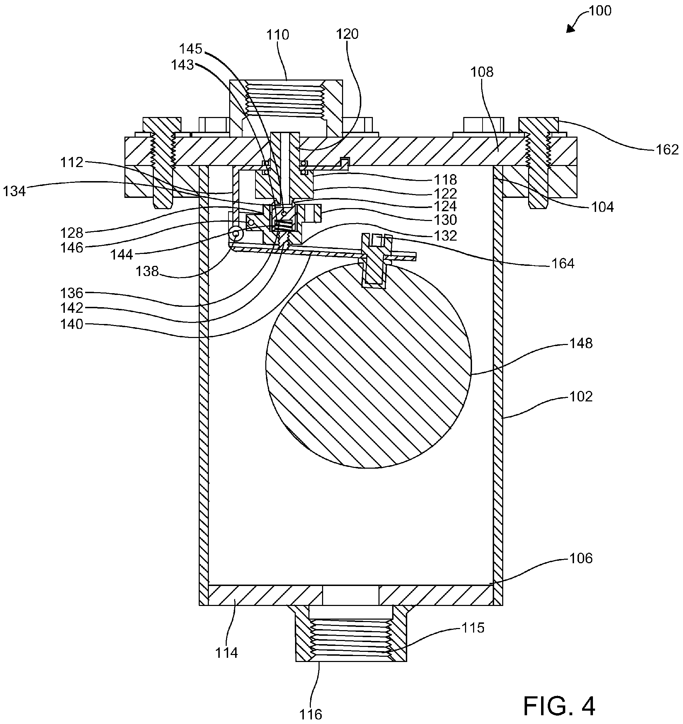

The second end 106 of the enclosure 102 is configured to receive a second plate 114 to close the second end 106. In an exemplary embodiment, the second plate 114 is produced from stainless steel. However, it should be appreciated that the second plate 114 may be produced from steel, aluminium, other metals, plastic, or other materials as desired by one skilled in the art and may be the same material or a different material from the enclosure 102 and/or the first plate 108. In an exemplary embodiment as best illustrated by FIG. 4, the second plate 114 is coupled to the enclosure 102 by welding. However, it should be appreciated that the second plate 114 may be coupled to the enclosure 102 by threaded fasteners, bolts, screws, welding, or other joining methods as desired by one skilled in the art. The second plate 114 may also include, in some embodiments, an aperture 116 formed therein with an internally threaded nipple 115 surrounding the aperture 116. The nipple 115 can act as a drain, if desired. The nipple 115, in an exemplary embodiment, may be configured to receive a pipe nipple (not illustrated) or a length of pipe (not illustrated) from a pipe system integrated within a fluid system. However, it should be understood that the nipple 115 may be configured in any desired manner. As shown, the aperture 116 is centrally located, although the aperture 116 can be formed elsewhere on the second plate 114 as desired.

As also illustrated by FIGS. 3-10, a valve seat 118 is received in the aperture 110 of the first plate 108. The valve seat 118 includes a first end 120 and a second end 122 disposed axially opposite the first end 120. The valve seat 118 may be produced from steel, aluminium, other metals, plastic, or other materials as desired by one skilled in the art. In an exemplary embodiment, the valve seat 118 is produced from stainless steel. The first end 120 of the valve seat 118 is configured to be received in the aperture 110 of the first plate 108. The first end 120 of the valve seat 118 may be coupled to the aperture 110 of the first plate 108 using any desired method, such as via threaded engagement, press-fit, welding, and the like. In an exemplary embodiment, the first end 120 of the valve seat 118 is coupled to the aperture 110 of the first plate 108 via threaded engagement between the first end 120 of the valve seat 118 and the aperture 110. The first end 120 of the valve seat 118 may also be threaded through the float lever attachment point 112 along with the first plate 108, aiding in the retention of the float lever attachment point 112 to the first plate 108.

The second end 122 of the valve seat 118 extends axially into the enclosure 102 and includes a seat edge 124. In an exemplary embodiment as illustrated by the figures, the seat edge 124 is substantially cylindrical and is configured to receive a disc assembly 128 thereon. However, it should be appreciated that the seat edge 124 may take any form and have any configuration as desired by one skilled in the art. The valve seat 118 also includes a venting aperture 126 that is formed therein. In an exemplary embodiment, the venting aperture 126 is substantially cylindrical in geometric shape. However, it should be appreciated that the venting aperture 126 may take any form as desired. The venting aperture 126, as illustrated by FIGS. 3-10, fluidly connects the aperture 110 to the enclosure 102, allowing for gas or liquids to vent or drain from the enclosure 102 when desired. The venting aperture 126 is centrally located within the valve seat 118, although the venting aperture 126 can be formed elsewhere in the valve seat 118 as desired.

As further illustrated by FIGS. 3-10, the combined air eliminator and drain valve 100 includes a disc assembly 128. The disc assembly 128 includes a first end 130, a second end 132 disposed axially opposite the first end 130, a protrusion 142, a recess 144 formed therein in the disc assembly 128, and a disc assembly pivot 146 formed thereon. The disc assembly 128 may be produced from steel, aluminium, other metals, plastic, or other materials as desired by one skilled in the art. In an exemplary embodiment, the disc assembly 128 is produced from stainless steel. The protrusion 142 is a part of the disc assembly 128. In an exemplary embodiment, the protrusion 142 of the disc assembly 128 rests on and bottoms on a top of a float lever 140. In an exemplary embodiment, the protrusion 142 is cylindrical in geometric shape. However, it should be appreciated that the protrusion 142 may take any geometric form and have any configuration as desired by one skilled in the art. In an exemplary embodiment, the protrusion 142 is configured as a threaded set-screw. The recess 144 may also take any form as desired by one skilled in the art.

As best illustrated by FIGS. 4-7, within the recess 144 is a biasing member 143, such as a spring, and a disc pivot 145 which, in combination, helps a disc 134 "self-level" within the disc assembly 128. The recess 144 may, in an exemplary embodiment, accommodate the biasing member 143 that aids the disc 134 in self-levelling, and the recess 144 may accommodate the protrusion 142 extending axially within the recess 144. The disc pivot 145 may be configured, in an exemplary embodiment, to allow the disc 134 to pivot with the recess 144. However, it should be appreciated that the disc pivot 145 may have any configuration and take any form as desired. The protrusion 142, essentially, floats within the recess 144 and is configured to allow the recess 144 and the disc 134 to pivot around the disc pivot 145 together to ensure that the disc 134 stays flat during sealing and stays controlled when rolling off during venting.

In an exemplary embodiment, the protrusion 142 may be set at different heights to aid in adjustment of the disc assembly 128 as desired. The protrusion 142, in an exemplary embodiment, functions as an adjustable stop for the float lever 140 by setting a hard stop or set point for where the float lever 140 engages the disc assembly 128. By adjusting the height or amount of protrusion 142 beneath the disc assembly 128, the engagement position of the float lever 140 with the disc assembly 128 can be precisely controlled. The protrusion 142 may be adjusted such that the float lever 140 sits flat and parallel relative to a bottom face of the disc assembly 128 when the valve is fully closed.

In an exemplary embodiment, the recess 144 has a geometric shape of a cylindrical puck. The disc assembly pivot 146 is formed thereon the second end 132 of the disc assembly 128 and may take any form and have any configuration as desired by one skilled in the art. In an exemplary embodiment, the disc assembly pivot 146 is configured as a rotatable pin; however, it should be understood that the disc assembly pivot may have any configuration and take any form as desired.

The first end 130 includes the disc 134. In an exemplary embodiment, the disc 134 takes the geometric form of a flat cylindrical puck. However, the disc 134 may take any geometric shape and have any configuration as desired by one skilled in the art. In an exemplary embodiment, the disc 134 is produced from a rubber material. However, it should be appreciated that the disc 134 may be produced from any material, such as rubber, metal, plastic, and the like, as desired and may be produced from the same material as the disc assembly 128.

The second end 132 of the disc assembly 128 includes a float assembly 136 that is coupled to the second end 132 of the disc assembly 128. The float assembly 136 may be coupled to the second end 132 of the disc assembly 128 using any desired method, including by threaded fasteners, bolts, screws, welding, or other joining methods as desired by one skilled in the art. In an exemplary embodiment, the disc assembly pivot 146 mechanically couples the disc assembly 128 and the float assembly 136, allowing for complementary movement of the two components. In an exemplary embodiment, the float assembly 136 is produced from stainless steel. However, it should be appreciated that the float assembly 136 may be produced from steel, aluminium, other metals, plastic, or other materials as desired by one skilled in the art.

The float assembly 136 includes a float lever pivot 138. The float lever pivot 138 may take any form and have any configuration as desired by one skilled in the art. In an exemplary embodiment, the float lever pivot 138 is a rotatable pin that is coupled to the float lever attachment point 112 of the enclosure 102. In this way, the float lever pivot 138 is mechanically coupled to the first plate 108 while allowing the float assembly 136 to axially pivot independently of the first plate 108. The float assembly 136 also includes the float lever 140 coupled to the float lever pivot 138 and extending laterally from the float lever pivot 138. The float lever 140 may take any geometric shape and have any configuration as desired by one skilled in the art. In an exemplary embodiment, the float lever 140 has the geometric shape of a narrow rectangular prism.

Finally, the float assembly 136 includes a float 148 coupled to the float lever 140 and extending laterally from the float lever 140. The float 148 may be coupled to the float lever 140 using any desired method, including by threaded fasteners, bolts, screws, welding, or other joining methods as desired by one skilled in the art. In an exemplary embodiment, the float 148 is coupled to the float lever 140 with at least one threaded fastener 164. The float 148 may also take any geometric form and have any configuration as desired by one skilled in the art. In an exemplary embodiment, the float 148 has the geometric shape of a sphere. The float 148 may also be comprised of any material as desired that allows for the float 148 to be buoyant in a fluid.

Through this mechanical structure, the float 148 is configured to pivot the disc 134 of the disc assembly 128 in incremental steps relative to the axial movement of the float assembly 136. Additionally, when the enclosure 102 is used with a liquid system, the float 148 is located below the float lever 140 and when the enclosure 102 is used with a gaseous system, the float 148 is located above the float lever 140.

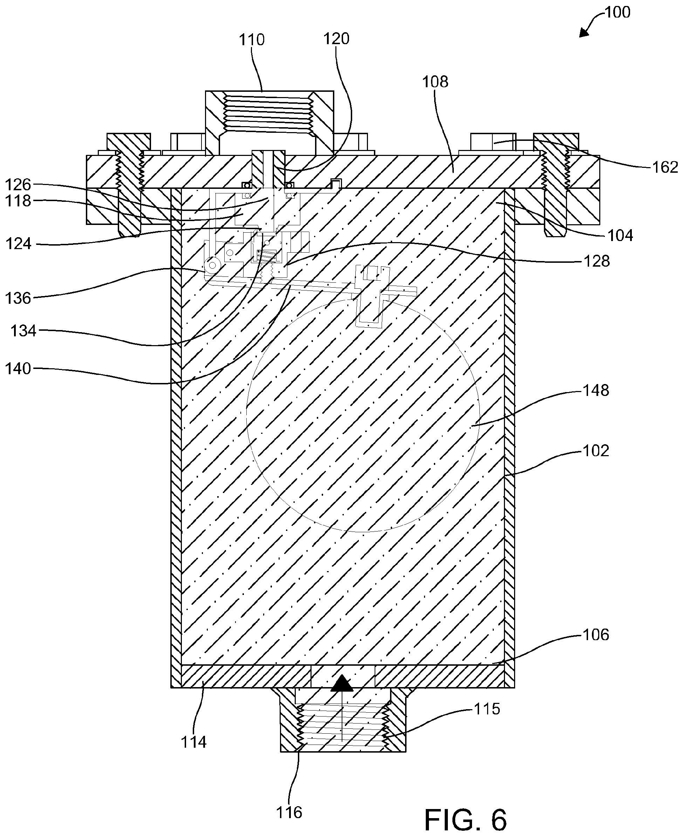

FIGS. 6-10 illustrate the combined air eliminator and drain valve 100 being used in a fluid system when the combined air eliminator and drain valve 100 is acting as an air eliminator. When used as an air eliminator, the device is mounted above a piping system so that gases can accumulate upward into the enclosure 102. In an embodiment, the fluid may be fuel, but it should be noted that any fluid may be used as desired by one skilled in the art. As the user begins to pump fluid through the system that the combined air eliminator and drain valve 100 is fluidly connected to, the fluid fills the enclosure 102, prompting the float 148 upwards, pivoting the float assembly 136 and disc assembly 128 to a closed position. This state is best illustrated by FIG. 6. The closed position occurs when the disc 134 of the disc assembly 128 is pressed tightly against seat edge 124 of the valve seat 118. This, effectively, covers the venting aperture 126 with the disc 134, sealing the system.

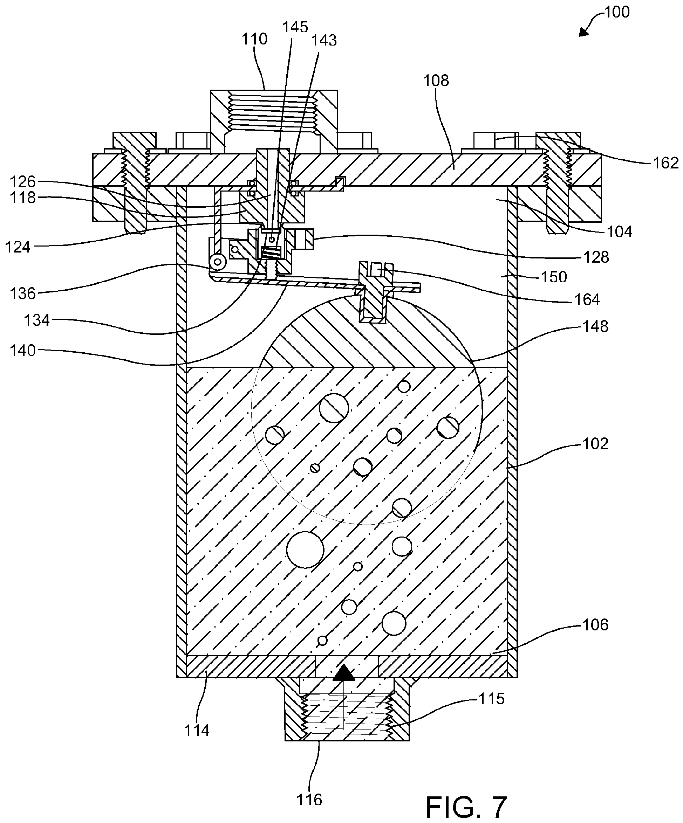

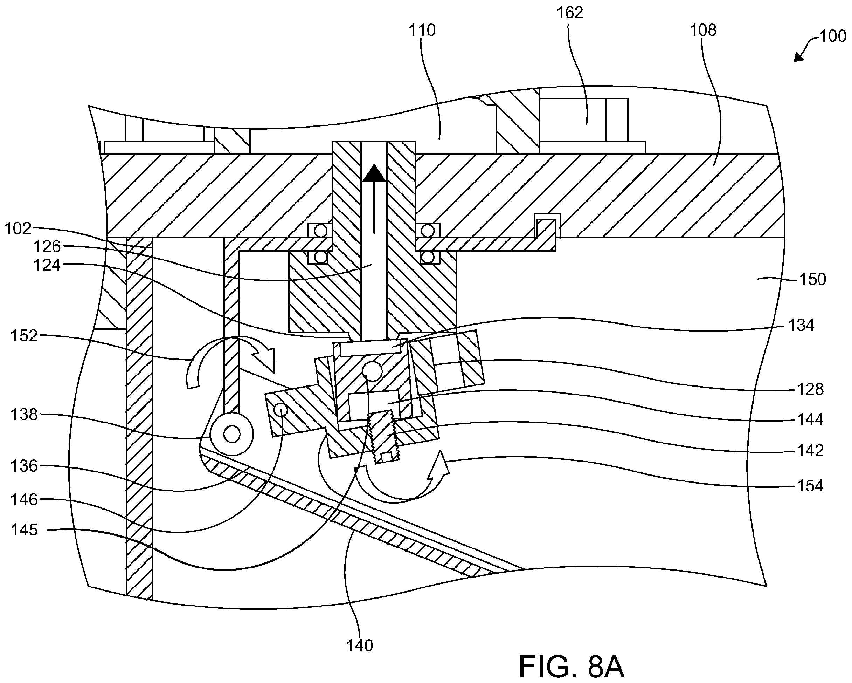

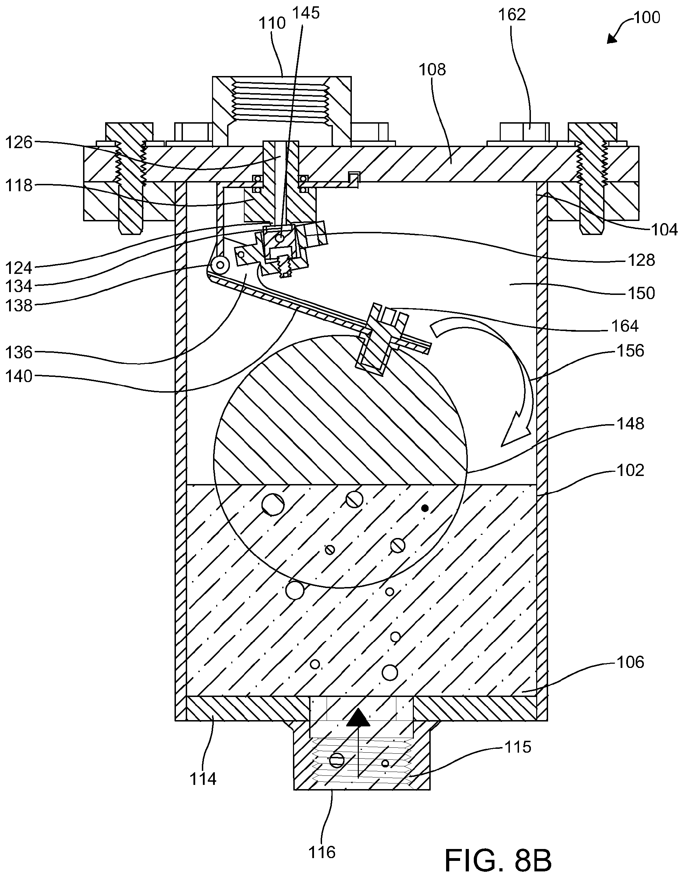

As the system operates, air bubbles trapped within the fluid pumped into the high-pressure system begin to separate and naturally rise to the top of the combined air eliminator and drain valve 100. This causes an air pocket 150 to be formed at the top of the combined air eliminator and drain valve 100. This is best illustrated by FIG. 7. As more air accumulates and the air pocket 150 grows larger, the fluid within the combined air eliminator and drain valve 100 is displaced and fluid levels within the enclosure 102 decrease. As fluid levels decrease, the float 148 begins to automatically lower in coordination with the amount of fluid decrease. As the float 148 lowers in the enclosure 102, the float lever 140 is pulled down, represented by arrow 156, which in turn begins to pry and pivot the disc 134 off the seat edge 124 through the pivoting of the disc assembly pivot 146, represented by arrow 154, and the pivoting of the float lever pivot 138, represented by arrow 152. This slowly reveals the venting aperture 126 and allows air to begin slowly venting out of the combined air eliminator and drain valve 100. FIGS. 8A and 8B best illustrate the partially open phase of the operation.

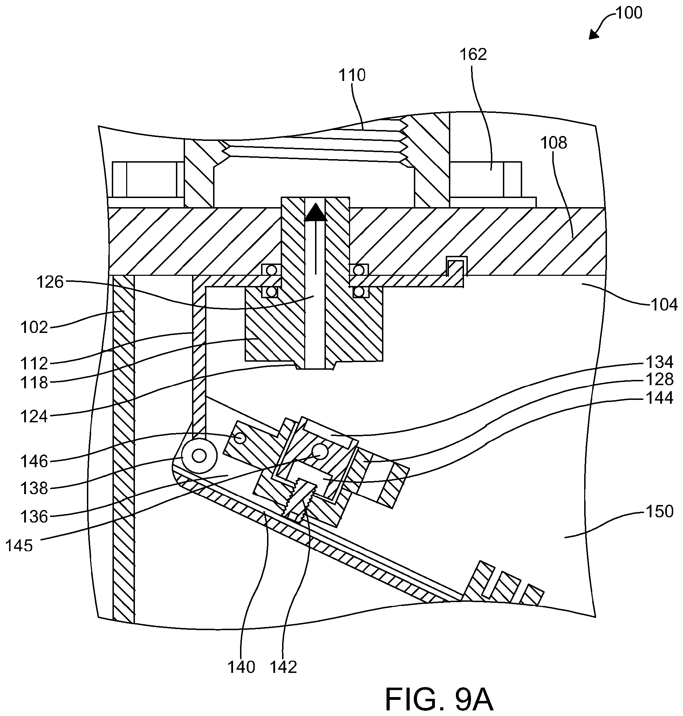

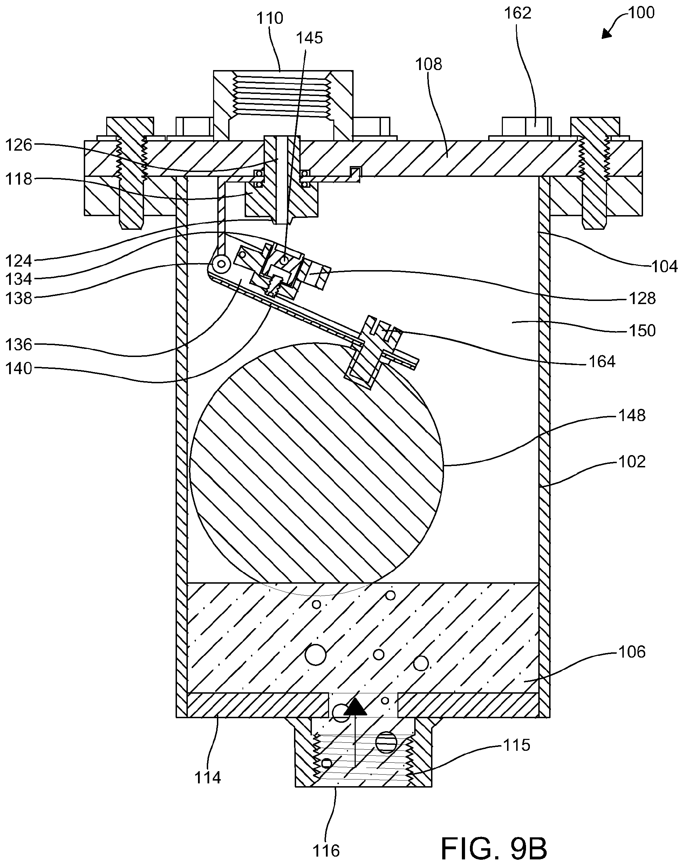

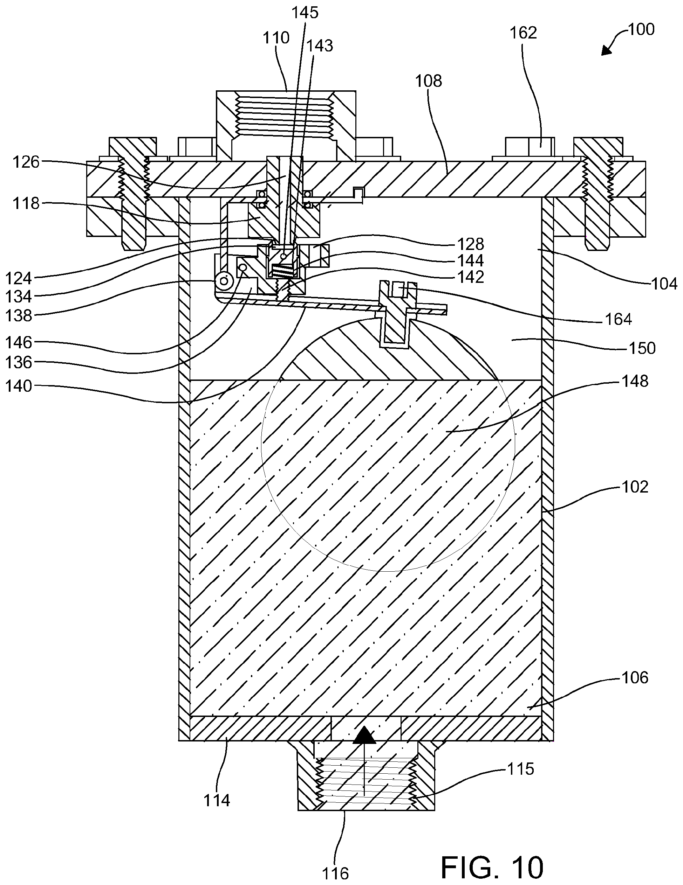

As the air pocket 150 continues to increase in volume, forcing the fluid levels to continue to decrease, the float 148, and therefore, the float lever 140 continues to lower. This forces the disc assembly 128 to pivot to a point where the disc 134 is fully removed from the seat edge 124, allowing for the venting aperture 126 to be fully open. This stage is best illustrated by FIGS. 9A and 9B. This allows the air within the combined air eliminator and drain valve 100 to vent out of the enclosure 102. As the air vents out of the enclosure 102 through the venting aperture 126, the fluid within the enclosure 102 begins increasing in volume and replacing the vented air. This forces the float 148 and the float lever 140 upwards, pivoting the disc 134 to begin to rest against the seat edge 124 once again. Once enough air has been vented out, the disc 134 will return to its starting position, tightly resting against the seat edge 124 and fully covering the venting aperture 126, providing a seal against air rising to the top of the combined air eliminator and drain valve 100. This is best illustrated by FIG. 10. The operation then begins again when the air pocket 150 increases enough in volume to decrease the volume of fluid in the enclosure 102.

When the combined air eliminator and drain valve 100 is used in a gaseous system, the combined air eliminator and drain valve 100 is inverted relative to the orientation described above and shown in FIGS. 6-10, such that the float 148 is located above the float lever 140. In this configuration, the device is mounted below the piping system so that fluids can accumulate downward into the enclosure 102, and the combined air eliminator and drain valve 100 functions as a drain valve to remove condensed or otherwise entrained liquid from the gaseous system, rather than venting air from a liquid system. As the user begins to flow gas through the system to which the combined air eliminator and drain valve 100 is fluidly connected, the enclosure 102 is initially substantially filled with gas. In this initial state, the float 148, being heavier than the surrounding gas, hangs downward by gravity from the float lever 140, which biases the float assembly 136 and the disc assembly 128 to a closed position. The closed position occurs when the disc 134 of the disc assembly 128 is pressed tightly against the seat edge 124 of the valve seat 118. This, effectively, covers the venting aperture 126 with the disc 134, sealing the system and preventing the pressurized gas from escaping through the venting aperture 126.

As the system operates, droplets of liquid condensed or otherwise entrained within the gas pumped through the system begin to separate from the gas stream and naturally collect, by gravity, at the bottom of the combined air eliminator and drain valve 100, which in this inverted orientation is the end of the enclosure 102 adjacent the valve seat 118 and the float 148. This causes a liquid pocket to be formed at the bottom of the combined air eliminator and drain valve 100. As more liquid accumulates and the liquid pocket grows larger, the gas within the combined air eliminator and drain valve 100 is displaced and the liquid level within the enclosure 102 rises. As the liquid level rises, the float 148, being buoyant in the accumulated liquid, begins to automatically rise in coordination with the increasing volume of liquid. As the float 148 rises within the enclosure 102, the float lever 140 is pushed upward, which in turn begins to pry and pivot the disc 134 off the seat edge 124 through the pivoting of the disc assembly pivot 146 and the pivoting of the float lever pivot 138. This slowly reveals the venting aperture 126 and allows the accumulated liquid to begin slowly draining out of the combined air eliminator and drain valve 100 through the venting aperture 126.

As the liquid pocket continues to increase in volume, forcing the float 148 and, therefore, the float lever 140 to continue to rise, the disc assembly 128 is pivoted to a point where the disc 134 is fully removed from the seat edge 124, allowing the venting aperture 126 to be fully open. This allows the liquid within the combined air eliminator and drain valve 100 to drain out of the enclosure 102. As the liquid drains out of the enclosure 102 through the venting aperture 126, the volume of liquid within the enclosure 102 begins to decrease and is replaced by gas from the system. This allows the float 148 and the float lever 140 to lower, pivoting the disc 134 to begin to rest against the seat edge 124 once again. Once enough liquid has been drained out, the disc 134 will return to its starting position, tightly resting against the seat edge 124 and fully covering the venting aperture 126, providing a seal against the gas escaping through the venting aperture 126. The operation then begins again when the liquid pocket increases enough in volume to raise the float 148 within the enclosure 102.

The combined air eliminator and drain valve 100 benefits from multiple advantages over the prior art. As aforementioned, the disc 134 is pried or rolled open from the seat edge 124 as opposed to a pin pulling away from a rubber orifice. This allows for more efficient venting/draining. Additionally, this allows for the manufacturer to use a smaller float 148 and enclosure 102 than prior art systems while optimizing performance.

From the foregoing description, one ordinarily skilled in the art can easily ascertain the essential characteristics of this invention and, without departing from the spirit and scope thereof, can make various changes and modifications to the invention to adapt it to various usages and conditions.

The preferred aspects of the present disclosure may be summarized as follows:
1. A combined air eliminator and drain valve comprising:
   a hollow enclosure having a first end and a second end, the first end configured to receive a first plate thereon, the first plate having an aperture formed therein and a float lever attachment point axially extending into the hollow enclosure;
   a valve seat having a first end and a second end, wherein the first end of the valve seat is received in the aperture of the first plate, and wherein the second end of the valve seat includes a seat edge formed thereon, and a venting aperture formed therein; and
   a disc assembly having a first end and a second end, the first end of the disc assembly having a disc disposed adjacent the seat edge of the valve seat, the second end of the disc assembly having a float assembly coupled thereto, and the disc assembly further including a disc assembly pivot coupling the float assembly to the disc assembly, the float assembly comprising:
      a float lever pivot coupled to the float lever attachment point of the hollow enclosure;
      a float lever coupled to the float lever pivot and extending laterally from the float lever pivot; and
      a float coupled to the float lever and extending axially from the float lever, wherein the float moves the disc of the disc assembly in incremental steps relative to axial movement of the float assembly.
2. The combined air eliminator and drain valve of Aspect 1, wherein when the combined air eliminator and drain valve is used with a liquid system, the float is located below the float lever, and wherein when the combined air eliminator and drain valve is used with a gaseous system, the float is located above the float lever.
3. The combined air eliminator and drain valve of Aspect 1, wherein the float lever pivot allows the float assembly to pivot independently of the first plate.
4. The combined air eliminator and drain valve of Aspect 1, wherein the disc assembly pivot rotatably couples the disc assembly and the float assembly to allow complementary movement of the disc assembly and the float assembly.
5. The combined air eliminator and drain valve of Aspect 1, wherein the second end of the hollow enclosure is configured to receive a second plate to close the second end.
6. The combined air eliminator and drain valve of Aspect 5, wherein the second plate includes a second aperture formed therein and an internally threaded nipple formed within the second aperture.
7. The combined air eliminator and drain valve of Aspect 1, further comprising a seal disposed between the plate and the hollow enclosure.
8. The combined air eliminator and drain valve of Aspect 1, wherein the venting aperture fluidly connects the aperture of the plate to an interior of the hollow enclosure.
9. A combined air eliminator and drain valve comprising:
   a hollow enclosure having a first end and a second end, wherein the first end receives a first plate thereon, the first plate having a first aperture formed therein and a float lever attachment point formed thereon and extending into the hollow enclosure, and wherein the second end receives a second plate thereon to enclose the hollow enclosure;
   a valve seat having a first end and a second end, wherein the first end of the valve seat is received in the first aperture of the first plate, and wherein the second end of the valve seat includes a seat edge formed thereon and a venting aperture formed therein, the venting aperture fluidly connecting the first aperture of the first plate to an interior of the hollow enclosure; and
   a disc assembly having a first end and a second end, the first end of the disc assembly having a disc disposed adjacent the seat edge of the valve seat, the second end of the disc assembly having a float assembly coupled thereto, and the disc assembly further including a disc assembly pivot coupling the float assembly to the disc assembly, the float assembly comprising:
      a float lever pivot coupled to the float lever attachment point of the hollow enclosure;
      a float lever coupled to the float lever pivot and extending laterally from the float lever pivot, a protrusion of the disc assembly resting on a top of the float lever; and
      a float coupled to the float lever and extending axially from the float lever, wherein the float pivots the disc of the disc assembly off of the seat edge in incremental steps in response to incremental movement of the float assembly, progressively revealing the venting aperture;
      wherein when the combined air eliminator and drain valve is used with a liquid system, the float is located below the float lever, and wherein when the combined air eliminator and drain valve is used with a gaseous system, the float is located above the float lever.
10. The combined air eliminator and drain valve of Aspect 9, wherein the disc is a flat cylindrical puck.
11. The combined air eliminator and drain valve of Aspect 9, wherein the second plate includes a second aperture formed therein with an internally threaded nipple formed within the second aperture.
12. The combined air eliminator and drain valve of Aspect 9, wherein the float is a sphere and is coupled to the float lever with at least one threaded fastener.

## Claims

1. A combined air eliminator and drain valve comprising:
a hollow enclosure;
a valve seat coupled to the hollow enclosure, the valve seat including a seat edge and a venting aperture; and
a disc assembly disposed within the hollow enclosure, the disc assembly including a disc disposed adjacent the seat edge of the valve seat and a float assembly operatively coupled to the disc, the float assembly including a float lever and a float coupled to the float lever, wherein the float moves the disc of the disc assembly relative to the seat edge in conjunction with a movement of the float.

2. The combined air eliminator and drain valve of Claim 1, wherein when the combined air eliminator and drain valve is used with a liquid system, the float is located below the float lever, and wherein when the combined air eliminator and drain valve is used with a gaseous system, the float is located above the float lever.

3. The combined air eliminator and drain valve of Claim 1, wherein the disc seals the venting aperture of the valve seat when the disc is pressed against the seat edge.

4. The combined air eliminator and drain valve of Claim 1, wherein the disc assembly pries the disc off of the seat edge in incremental steps in response to incremental movement of the float to reveal the venting aperture.

5. The combined air eliminator and drain valve of Claim 1, wherein the disc assembly further includes a recess formed therein, a biasing member disposed within the recess, and a disc pivot disposed within the recess, the biasing member and the disc pivot cooperating to permit the disc to self-level within the disc assembly.

6. The combined air eliminator and drain valve of Claim 5, wherein the disc assembly further includes a protrusion that extends axially within the recess.

7. The combined air eliminator and drain valve of Claim 1, wherein the disc has the geometric form of a flat cylindrical puck.

8. The combined air eliminator and drain valve of Claim 1, wherein the float has the geometric shape of a sphere and is buoyant in a fluid.
